# EUROPÄISCHE PATENTSCHRIFT

(11) **EP 1 907 250 B1**
(45) Veröffentlichungstag und Bekanntmachung des Hinweises auf die Patenterteilung: **21.10.2009**
(21) Anmeldenummer: 06791543.9
(22) Anmeldetag: 20.07.2006
(51) Int. Cl.: B60S 9/08

(54) **STÜTZWINDE**
SEMITRAILER LANDING GEAR
VERIN D'APPUI

(30) Priorität: 23.07.2005 DE 102005034552
(43) Veröffentlichungstag der Anmeldung: 09.04.2008
(73) Patentinhaber: JOST-Werke GmbH, 63263 Neu-Isenburg (DE)
(72) Erfinder: MÜLLER, Gerald, 63179 Obertshausen (DE); SEIDEL, Günter, 64560 Riedstadt (DE); ALGÜERA, José, 63739 Aschaffenburg (DE)
(74) Vertreter: Fuchs
(86) Internationale Anmeldenummer: PCT/EP2006/007143
(87) Internationale Veröffentlichungsnummer: WO 2007/012424

(56) Entgegenhaltungen:
- EP-B1- 1 104 369
- US-A- 5 199 738
- US-A1- 2003 183 033

## Beschreibung

Die Erfindung betrifft eine Stützwinde, insbesondere zum Abstützen von Aufliegern, mit einem in seiner Höhe teleskopartig verfahrbaren, eine Außenhülse und eine Innenhülse aufweisenden Abstützelement, wobei die Außenhülse einen Befestigungsflansch zum Anbringen an ein Fahrzeug umfasst.

Derartige Stützwinden werden insbesondere zum Abstützen von Aufliegern eines Sattelzuges verwendet. Diese Stützwinden werden aus Vierkantrohren hergestellt, die ineinander gesteckt und gegeneinander verfahren werden können, wie beispielsweise aus der EP 1 104 369 B1 bekannt ist.

Da die Stützwinden üblicherweise an Nutzfahrzeugen angebaut werden und sich dadurch die Nutzlast verringert, existieren seit langer Zeit Bestrebungen, die Stützwinden möglichst leicht bauend herzustellen. Dieses Ziel sollte auch durch den Einsatz von Aluminium als Werkstoff erreicht werden, wie in der EP 0 380 941 A2 beschrieben ist. Bei dieser Stützvorrichtung ist eine Außenhülse einteilig mit ihrer Befestigungsplatte zum Anbringen der Stützvorrichtung an ein Fahrzeug im Strangpressverfahren hergestellt. Aufgrund des Rohlings in Blockform ist dieses Verfahren auf Leichtmetall beschränkt. Stützvorrichtungen aus Leichtmetall haben sich jedoch auf dem Markt nicht durchgesetzt, da sie aufgrund des hochwertigen Materials teuer sind und sich aufgrund der geringen Materialfestigkeit als anfällig im betrieblichen Einsatz erwiesen haben. Eine weitere Möglichkeit leichtere Stützwinden herzustellen besteht darin, die Wandstärke der Außen- und Innenhülse dünner auszuführen. Diese Maßnahme führt darüber hinaus zu deutlich günstigeren Herstellungskosten. Die Stützwinden weisen dann jedoch eine höhere Anfälligkeit gegenüber mechanischen Beanspruchungen auf.

Dokument US-A-2003/0183033 offenbart eine Stützwinde gemäß dem ersten Teil des Anspruchs 1.

Demzufolge lag der Erfindung die Aufgabe zugrunde, Stützwinden mit verringertem Gewicht und gleichzeitig günstigeren Herstellungskosten zu entwickeln.

Die Aufgabe wird durch eine Stützwinde gelöst, bei der mindestens eine Seitenwand der Außenhülse und/oder der Innenhülse mit einem in axialer Richtung verlaufenden abgewinkelten Wandabschnitt ausgebildet ist.

Durch den abgewinkelten Wandabschnitt der Außen- und/oder Innenhülse ist die Stützwinde in der Lage, deutlich höhere Biegemomente aufzunehmen. Hierfür sollte der abgewinkelte Wandabschnitt gegenüber der Seitenwand um 5° bis 30°, besonders bevorzugt 15° bis 25°, abgewinkelt sein. Der abgewinkelte Wandabschnitt sollte nicht über die halbe Breite der Seitenwand hinausgehen, da andernfalls der gewünschte Versteifungseffekt geringer wird.

In einer bevorzugten Ausführungsform ist in zwei gegenüberliegenden Seitenwänden jeweils ein abgewinkelter Wandabschnitt angeordnet. Dieses sorgt einerseits für eine nochmals erhöhte Biegesteifigkeit ohne zusätzlichen Aufwand bei der Fertigung.

Es hat sich auch als günstig erwiesen, wenn der abgewinkelte Wandabschnitt mit einem ersten Abschnitt an den Befestigungsflansch und mit einem zweiten Abschnitt an die gegenüberliegende Seitenwand angrenzt. Bei dieser Ausrichtung liegen die Seitenwände mit ihren abgewinkelten Wandabschnitten quer zur Fahrtrichtung, das heißt in Richtung der Fahrzeuglängsachse. Während des An- und Abkuppelns wirken auf die Stützwinden Stöße ebenfalls in Richtung der Fahrzeuglängsachse, die dann ohne eine Materialverformung der Außen- und/oder Innenhülse aufgefangen werden.

Vorteilhafterweise ist der abgewinkelte Wandabschnitt gegenüber der Seitenwand in Richtung des Befestigungsflansches nach außen gerichtet. Auch diese Ausführungsform führt zu einer höheren Steifigkeit gegenüber einer Ausführungsform, bei welcher der abgewinkelte Wandabschnitt nach innen geneigt ist.

Günstigerweise ist der abgewinkelte Wandabschnitt der Außenhülse und der Innenhülse komplementär zueinander angeordnet. Dieses hat den Vorteil, dass die Innenhülse mit ihrem gesamten Außenumfang an der Innenseite der Außenhülse anliegt und während des Ein- oder Ausfahrens der Stützwinde verdrehsicher und mit geringem Spiel durch die Außenhülse geführt ist.

Die Außenhülse und der Befestigungsflansch können einstückig mittels Rollbiegen aus einem Flachstahl gefertigt sein, ebenso die Innenhülse. In den meisten Fällen wird kaltumgeformt, nur in Sonderfällen, bei großen Querschnitten oder sehr kleinen Biegeradien, wird der Werkstoff erwärmt, um die zur Umformung erfordertichen Kräfte zu reduzieren. Der wesentliche Vorteil rollgebogener gegenüber stranggepresster Hülsen liegt in der annähernd freien Wahl der Legierung des plattenartigen Ausgangsmaterials. Hierbei können auch übliche Stähle Verwendung finden. Weiterhin ist es nicht notwendig, einzelne Bauteile über mehrere in der Fertigung aufwendig zu erstellende Schweißnähte zu verbinden. Durch den vergleichsweise kurzen Biegevorgang des Materials lassen sich sehr große Stückzahlen pro Zeiteinheit herstellen.

In einer besonderen Ausführungsform weist die Außenhülse und/oder die Innenhülse maximal eine Schweißnaht auf. Durch diese Art der stoffschlüssigen Verbindung entstehen Hülsen mit einem in sich geschlossenen Hohlkörper, wodurch die Biegesteifigkeit weiter erhöht wird. Dabei kann die Schweißnaht an einer für die Herstellung sehr günstigen Position angeordnet sein, beispielsweise an der zum Befestigungsflansch nahe liegenden Seitenwand.

Es hat sich als besonders vorteilhaft herausgestellt, wenn die Verbindungsnaht in axialer Richtung der Außenhülse angeordnet ist. Die Schweißnaht kann dabei mittig durch eine Seitenwand der Hülse verlaufen oder im Verbindungsbereich zwischen zwei zueinander benachbarten Seitenwänden.

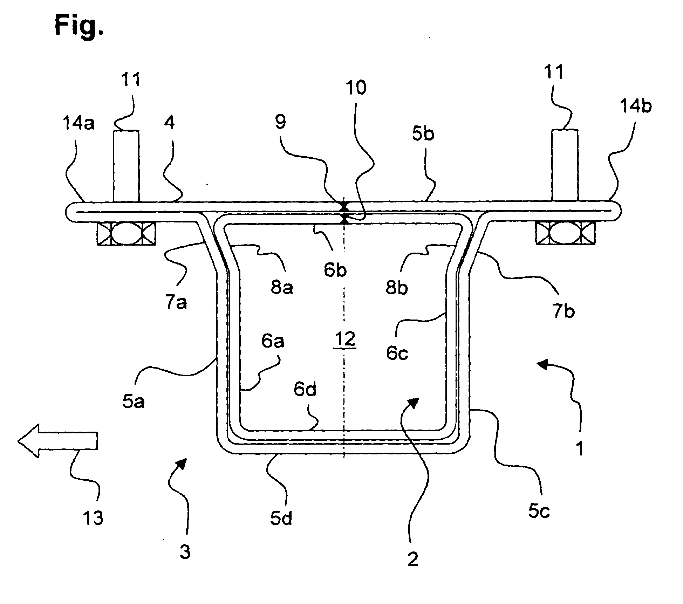

Zum besseren Verständnis wird die Erfindung nachfolgend anhand der einzigen Zeichnungsfigur näher erläutert.

Die Figur zeigt eine Draufsicht auf eine Außenhülse 1 mit darin angeordneter Innenhülse 2 eines Abstützelementes 3. Die Außenhülse 1 umfasst die Seitenwände 5a-d, welche einen im Wesentlichen rechteckigen Innenraum 12 umgeben.

Die Seitenwand 5b weist in ihrer Symmetrieachse eine Verbindungsschweißnaht 9 auf, welche beide Hälften der Seitenwand 5b stoffschlüssig miteinander verbindet. An der Seitenwand 5b wird die gesamte Stützwinde über die Außenhülse 1 an ein nicht gezeigtes Fahrzeug angebracht. Hierfür ist ein an der Seitenwand 5b beidseitig der Verbindungsschweißnaht 9 seitlich über die Seitenwände 5a, 5c hinaus ragender Befestigungsflansch 4 ausgebildet.

Die Seitenwände 5a-d sind aus einem ursprünglich plattenartigen Ausgangsmaterial durch Biegen ausgeformt und gehen demzufolge nahtlos ineinander über. In Endabschnitten 14a, 14b des Befestigungsflansches 4 ist jeweils eine Umlegung zu erkennen, an der das Material um 180° umgebogen ist. In der Ausführungsform der Figur handelt es sich um eine scharfe Umlegung, die nach dem Biegevorgang nachgewalzt wurde, so dass im Bereich der Umlegung das Wandmaterial sogleich wieder aneinander aufliegt.

Bei der üblichen vorgesehenen Montage stehen die Seitenwände 5a, 5c der Außenhülse 1 rechtwinklig zur und die Seitenwände 5b, 5d in Fahrtrichtung 13. Zur Erhöhung der Stabilität sind die gegenüberliegenden Seitenwände 5a, 5c mit abgewinkelten Wandabschnitten 7a, 7b versehen, die in Richtung des Befestigungsflansches 4 um ca. 20° nach außen gestellt sind. Durch diese konstruktive Maßnahme ist es möglich, das Material der Außenhülse 1 bei gleicher Stabilität dünner zu wählen. Die Seitenwände 5a, 5c sind mit dem abgewinkelten Wandabschnitt 7a, 7b ausgebildet, um höhere beim Ankuppeln in oder entgegengesetzt zur Fahrtrichtung 13 auf den Auflieger (nicht gezeigt) einwirkende Kräfte aufnehmen zu können.

Zur Befestigung an einem nicht gezeigten Fahrzeug sind in ebenfalls in der Draufsicht nicht sichtbare Bohrungen Befestigungsbolzen 11 eingesteckt. Die Befestigullgsbolzen 11 ragen über die plane Fläche der Seitenwand 5b mit ihrem Befestigungsflansch 4 hinaus.

Die Innenhülse 2 wurde ebenfalls aus einem plattenartigen Ausgangsmaterial durch Rollbiegen ausgeformt und zu einem geschlossenen Hohlkörper über die Verbindungsschweißnaht 10 verbunden. Die Verbindungsschweißnaht 10 befindet sich ebenfalls in der Symmetrieachse und ist unmittelbar benachbart zu der Verbindungsschweißnaht 9 angeordnet.

Die Innenhülse 2 ist als Vierkantrohr mit zwei jeweils gleichlangen paarweise gegenüberliegenden Seitenwänden 6a-d ausgeformt, wobei die Seitenwände 6a, 6c komplementär zu den Seitenwänden 5a, 5c abgewinkelte Wandabschnitte 8a, 8b aufweisen. Dadurch wird einerseits auch das maximal aufnehmbare Biegemoment erhöht und andererseits eine gute axiale Führung der Innenhülse 2 gegenüber der Außenhülse 1 gewährleistet.

### Bezugszeichenliste

- 1: Außenhülse
- 2: Innenhülse
- 3: Abstützelement
- 4: Befestigungsflansch
- 5a-d: Seitenwand Außenhülse
- 6a-d: Seitenwand Innenhülse
- 7a, 7b: abgewinkelter Wandabschnitt Außenhülse
- 8a, 8b: abgewinkelter Wandabschnitt Innenhülse
- 9: Verbindungsschweißnaht Außenhülse
- 10: Verbindungsschweißnaht Innenhülse
- 11: Befestigungsbolzen
- 12: Innenraum
- 13: Fahrtrichtung
- 14a, 14b: Endabschnitt Befestigungsflansch

## Patentansprüche

1. Stützwinde, insbesondere zum Abstützen von Aufliegern, mit einem in seiner Höhe teleskopartig verfahrbaren, eine Außenhülse (1) und eine Innenhülse (2) aufweisenden Abstützelement (3), wobei die Außenhülse (1) einen Befestigungsflansch (4) zum Anbringen an ein Fahrzeug umfasst,
**dadurch gekennzeichnet,**
**dass** mindestens eine Seitenwand (5a-d, 6a-d) der Außenhülse (1) und/oder der Innenhülse (2) mit einem in axialer Richtung verlaufenden abgewinkelten Wandabschnitt (7a, 7b, 8a, 8b) ausgebildet ist.

2. Stützwinde nach Anspruch 1, **dadurch gekennzeichnet, dass** in zwei gegenüberliegenden Seitenwänden (5a, 5c, 6a, 6c) jeweils ein abgewinkelter Wandabschnitt (7a, 7b, 8a, 8c) angeordnet ist.

3. Stützwinde nach Anspruch 1 oder 2, **dadurch gekennzeichnet, dass** der abgewinkelte Wandabschnitt (7a, 7b, 8a, 8c) mit einem ersten Abschnitt an den Befestigungsflansch (4) und mit einem zweiten Abschnitt an die gegenüberliegende Seitenwand (5a, 5c, 6a, 6c) angrenzt.

4. Stützwinde nach einem der Ansprüche 1 bis 3, **dadurch gekennzeichnet, dass** der abgewinkelte Wandabschnitt (7a, 7b, 8a, 8c) gegenüber der Seitenwand (5a, 5c, 6a, 6c) in Richtung des Befestigungsflansches (4) nach außen gerichtet ist.

5. Stützwinde nach einem der Ansprüche 1 bis 4, **dadurch gekennzeichnet, dass** der abgewinkelte Wandabschnitt (7a, 7b, 8a, 8c) der Außenhülse (1) und der Innenhülse (2) komplementär zueinander angeordnet ist.

6. Stützwinde nach einem der Ansprüche 1 bis 5, **dadurch gekennzeichnet, dass** die Außenhülse (1) und der Befestigungsflansch (4) einstückig mittels Rollbiegen aus einem Flachstahl gefertigt sind.

7. Stützwinde nach einem der Ansprüche 1 bis 6, **dadurch gekennzeichnet, dass** die Innenhülse (2) einstückig mittels Rollbiegen aus einem Flachstahl gefertigt ist.

8. Stützwinde nach einem der Ansprüche 1 bis 7, **dadurch gekennzeichnet, dass** die Außenhülse (1) und/oder die Innenhülse (2) maximal eine Verbindungsschweißnaht (9, 10) aufweist.

9. Stützwinde nach einem der Ansprüche 1 bis 8, **dadurch gekennzeichnet, dass** die Verbindungsschweißnaht (9, 10) in axialer Richtung der Außenhülse (1) und/oder der Innenhülse (2) verläuft.

## Claims

1. Support jack, in particular for supporting trailers, with a vertically telescopic support member (3) having an outer sleeve (1) and an inner sleeve (2), wherein the outer sleeve (1) comprises a fastening flange (4) for attachment to a vehicle,
**characterised in that**
at least one side wall (5a-d, 6a-d) of the outer sleeve (1) and/or of the inner sleeve (2) is designed with an angled wall section (7a, 7b, 8a, 8b) extending in an axial direction.

2. Support jack according to claim 1, **characterised in that** one angled wall section (7a, 7b, 8a, 8b) is arranged in each of two opposing side walls (5a, 5c, 6a, 6c).

3. Support jack according to either claim 1 or claim 2, **characterised in that** the angled wall section (7a, 7b, 8a, 8b) butts with a first portion against the fastening flange (4) and with a second portion against the opposing side wall (5a, 5c, 6a, 6c).

4. Support jack according to any one of claims 1 to 3, **characterised in that** the angled wall section (7a, 7b, 8a, 8b) is oriented outwards relative to the side wall (5a, 5c, 6a, 6c), in the direction of the fastening flange (4).

5. Support jack according to any one of claims 1 to 4, **characterised in that** the angled wall section (7a, 7b, 8a, 8b) of the outer sleeve (1) and of the inner sleeve (2) are arranged complementary to each other.

6. Support jack according to any one of claims 1 to 5, **characterised in that** the outer sleeve (1) and the fastening flange (4) are manufactured as a single piece by means of roll bending from a piece of flat-plate steel.

7. Support jack according to any one of claims 1 to 6, **characterised in that** the inner sleeve (2) is manufactured as a single piece by means of roll bending from a piece of flat-plate steel.

8. Support jack according to any one of claims 1 to 7, **characterised in that** the outer sleeve (1) and/or the inner sleeve (2) has at most one seam-welded joint (9, 10).

9. Support jack according to any one of claims 1 to 8, **characterised in that** the seam-welded joint (9, 10) extends in an axial direction of the outer sleeve (1) and/or of the inner sleeve (2).

## Revendications

1. Vérin d'appui, destiné à soutenir des semi-remorques, doté d'un élément d'appui (3) mobile en hauteur de façon télescopique et comprenant un manchon extérieur (1) et un manchon intérieur (2), le manchon extérieur (1) comportant une bride de fixation (4) destinée à l'installer sur un véhicule,
**caractérisé en ce**
**qu'**au moins une paroi latérale (5a-d, 6a-d) du manchon extérieur (1) et/ou du manchon intérieur (2) est conçue avec une partie de paroi coudée (7a, 7b, 8a, 8b) s'étendant dans la direction axiale.

2. Vérin d'appui selon la revendication 1, **caractérisé en ce que** respectivement une partie de paroi coudée (7a, 7b, 8a, 8b) est disposée dans deux parois latérales (5a, 5c, 6a, 6c) opposées.

3. Vérin d'appui selon la revendication 1 ou 2, **caractérisé en ce que** la partie de paroi coudée (7a, 7b, 8a, 8b) est adjacente à la bride de fixation (4) par une première partie et à la paroi latérale opposée (5a, 5c, 6a, 6c) par une seconde partie.

4. Vérin d'appui selon l'une quelconque des revendications 1 à 3, **caractérisé en ce que** la partie de paroi coudée (7a, 7b, 8a, 8b) est orientée vers l'extérieur en direction de la bride de fixation (4) par rapport à la paroi latérale (5a, 5c, 6a, 6c).

5. Vérin d'appui selon l'une quelconque des revendications 1 à 4, **caractérisé en ce que** les parties de paroi coudées (7a, 7b, 8a, 8b) du manchon extérieur (1) et du manchon intérieur (2) sont disposées de manière complémentaire l'une par rapport à l'autre.

6. Vérin d'appui selon l'une quelconque des revendications 1 à 5, **caractérisé en ce que** le manchon extérieur (1) et la bride de fixation (4) sont fabriqués en une seule pièce à partir d'un acier plat au moyen d'un roulage.

7. Vérin d'appui selon l'une quelconque des revendications 1 à 6, **caractérisé en ce que** le manchon intérieur (2) est fabriqué en une seule pièce à partir d'un acier plat au moyen d'un roulage.

8. Vérin d'appui selon l'une quelconque des revendications 1 à 7, **caractérisé en ce que** le manchon extérieur (1) et/ou le manchon intérieur (2) comprennent au maximum un joint de soudure d'assemblage (9, 10).

9. Vérin d'appui selon l'une quelconque des revendications 1 à 8, **caractérisé en ce que** le joint de soudure de liaison (9, 10) s'étend dans la direction axiale du manchon extérieur (1) et/ou du manchon intérieur (2).
